# EUROPÄISCHE PATENTSCHRIFT

(11) **EP 0 924 410 B1**
(45) Veröffentlichungstag und Bekanntmachung des Hinweises auf die Patenterteilung: **24.09.2003**
(21) Anmeldenummer: 97810993.2
(22) Anmeldetag: 17.12.1997
(51) Int. Cl.: F02C 7/143, F02C 1/00, F02C 1/10, F02C 6/18

(54) **Verfahren zum Betrieb einer Gasturbogruppe**
Method of operating a gas turbo group
Procédé d'utilisation d'un groupe generateur à turbines à gaz

(43) Veröffentlichungstag der Anmeldung: 23.06.1999
(73) Patentinhaber: ALSTOM (Switzerland) Ltd, 5401 Baden (CH)
(72) Erfinder: Frutschi, Hansulrich, 5223 Riniken (CH)

(56) Entgegenhaltungen:
- EP-A- 0 050 687
- EP-A- 0 770 771
- WO-A-97/04228
- DE-A- 2 925 091
- DE-A- 2 931 178
- FR-A- 1 007 140

## Beschreibung

### Technisches Gebiet

Die vorliegende Erfindung betrifft ein Verfahren zum Betrieb eine Gasturbogruppe gemäss Oberbegriff des Anspruchs 1.

### Stand der Technik

Die isotherme Verdichtung in Verbindung mit Rekuperation der Abgaswärme ist eine erstrebenswerte Kreislaufkonfiguration für Gasturbinen. Dabei betrifft die am einfachsten zu realisierende Annäherung an eine isotherme Verdichtung eine Innenkühlung durch fortlaufende Wassereinspritzung. Um einen möglichst grossen Teil des Wassers wieder zurückzugewinnen, ist ein Nachkühler, allenfalls als letzte Zwischenkühlstufe, anzuordnen. Sowohl die Wassereinspritzung in den Verdichter, wie auch die Nach- bzw. Zwischenkühlung durch einen Oberflächenwärmetauscher, sowie vor allem die luftseitige Integration eines dringend notwendigen Rekuperators erfordern eine totale Neuauslegung und Konstruktion der Gasturbine. Dadurch ist eine solche Realisierung aus wirtschaftlicher Sicht ausgeschlossen.

Die Schrift WO 97/04228 offenbart ein Verfahren zum Betrieb einer Gasturbogruppe mit einer einstufigen Verbrennung, mit einem nachgeschalteten Wärmetausch zur Nutzung des kalorischen Potentials der Abgase aus der Turbine der Gasturbogruppe. Der Wärmetauscher steht in Verbindung mit einer Heissluftturbogruppe, welche aus einer Reihe von zwischengekühlten Verdichtern und aus einer Turbine besteht.

Die Offenlegungsschrift DE-A-29 25 091 offenbart eine Verbrennungskraftmaschine mit offenem Kreislauf, bei der Verbrennungsluft isotherm in einem Kompressionsraum hochverdichtet, Brennstoff in diesen eingespritzt, verbrannt und die Verbrennungsgase vor dem Ausstoss in einem Expansionsraum isotherm arbeitsleistend entspannt werden. In den Kompressionsraum wird Wasser eingespritzt.

Die Offenlegungsschrift DE-A-29 31 178 offenbart ein Gasturbinen-Energiewandlungs-Verfahren, welches sich durch eine Einspritzung einer Flüssigkeit in den Verdichter auszeichnet. Durch die Verdampfung der Flüssigkeit wird das zu komprimierende Gas gekühlt und nahezu isotherm verdichtet.

EP-A-0 770 771 offenbart eine Schaltung mit der Kühlung der Verdichterluft einer Gasturbine durch in den Verdichter eingespritztes Wasser.

Die Schrift EP-A-0 050 687 offenbart eine Heissluftturbinen-Dampfkraftanlage mit einer Heissluftgruppe, welche aus einem Verdichter und aus einer Turbine besteht. Der Verdichter dieser Heissluftturbinengruppe ist austrittsseitig über die Sekundärseite eines Rekuperators und einem im Bereich sehr hohen Wärmeübergangs einer Wirbelschichtfeuerung befindlichen Wärmeübertrager mit der Heissluftturbine verbunden. Die in der Heissluftturbine entspannte Luft wird über die Primärseite des Rekuperators als Verbrennungsluft der Wirbelschichtfeuerung zugeführt.

### Darstellung der Erfindung

Hier will die Erfindung Abhilfe schaffen. Der Erfindung, wie sie in den Ansprüchen gekennzeichnet ist, liegt die Aufgabe zugrunde, bei einer Gas/Dampf-Kraftwerksanlage der eingangs genannten Art die am Markt vorhandene Gasturbine ohne jegliche Veränderung bestimmungsgemäss zu betreiben, bei einer Maximierung des Wirkungsgrades.

Erfindungsgemäss wird dies dadurch erreicht, dass die thermodynamische Wirkung des Rekuperators so genutzt wird, dass der Hochdruckluftstrom einer nachgeschalteten Heissluftturbine erhitzt wird. Diese ihrerseits besteht aus einem Kompressor mit Einspritzkühlung, einem ungekühlten Expander und einem Generator. Diese Turbogruppe, d.h. deren Komponenten, wie auch der Rekuperator sind marktgängige Aggregate.

Der wesentliche Vorteil der Erfindung ist sonach darin zu sehen, dass diese Aggregate der äusserst moderaten Kreislaufparameter zufolge weder bauliche noch betriebliche Probleme stellen.

Die vorgeschlagene Schaltung eignet sich auch gut für eine sequentiell befeuerte Gasturbogruppe, wie sie aus der Druchschrift EP-0 620 362 A1 hervorgeht.

Vorteilhafte und zweckmässige Weiterbildungen der erfindungsgemässen Aufgabenstellung sind in den weiteren Ansprüchen gekennzeichnet.

Im folgenden wird anhand der Zeichnungen Ausführungsbeispiele der Erfindung näher erläutert. Alle für das unmittelbare Verständnis der Erfindung nicht erforderlichen Elemente sind fortgelassen,Die Strömungsrichtung der Medien ist mit Pfeilen angegeben.

### Kurze Beschreibung der Zeichnung

Es zeigt:
- Fig. 1: eine Gas/Dampf-Kraftwerksanlage mit einem nachgeschalteten offenen Luftturbinenprozess,
- Fig. 2: eine weitere Kraftwerksanlage mit einer geschlossenen Schaltung und
- Fig. 3: ein TS-Diagramm nach der Schaltung gemäss Fig. 1 und 2.

### Wege zur Ausführung der Erfindung, gewerbliche Verwendbarkeit

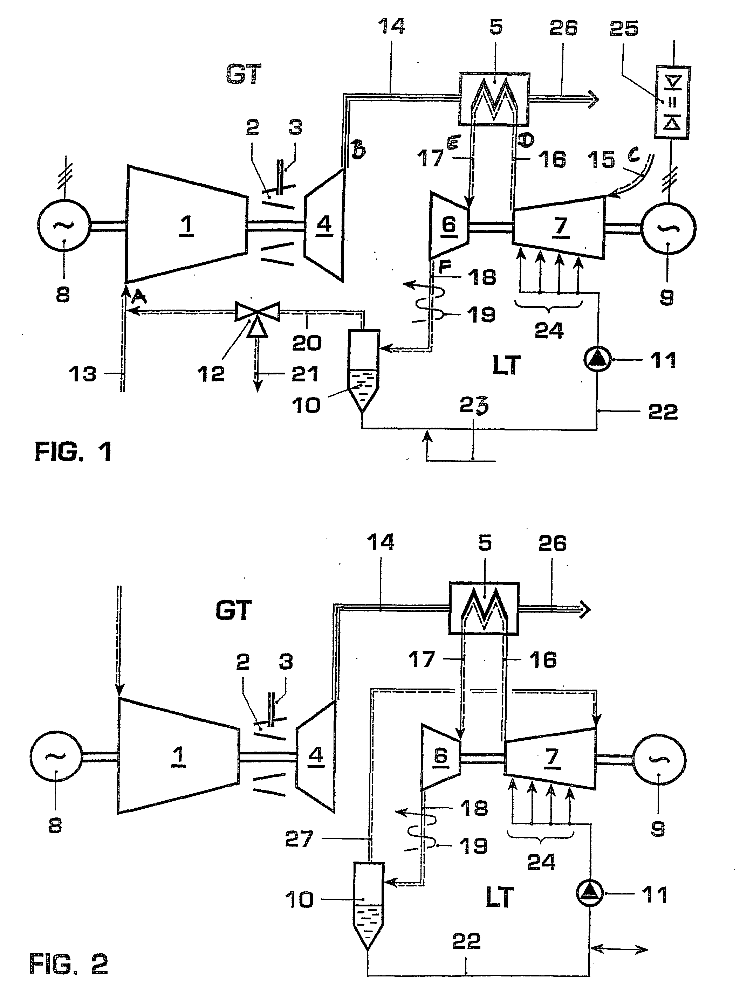

Fig. 1 zeigt eine Kraftwerksanlage, welche aus einer Gasturbogruppe GT und einem nachgeschalteten offenen Luftturbinenprozess LT besteht. Die Gasturbogruppe selbst ist konventionell aufgebaut: sie besteht aus einer Verdichtereinheit 1, einer mit einem Brennstoff 3 betriebenen Brennkammer 2, einer nachgeschalteten Turbine 4 und einem Generator 8. Abgasseitig der Turbine 4 ist ein Rekuperator 5 geschaltet, der in etwa dem Abhitzedampferzeuger einer Kombianlage entspricht. Dieser Rekuperator 5 wird einerseits durch die Abgase 14 aus der Turbine 4 durchströmt, andererseits steht er in Wirkverbindung mit dem bereits genannten Luftturbinenprozess LT, primär mit einer Expanderturbogruppe, welche aus Expander 6, Verdichter 7 und Generator 9 besteht. Die Ansaugluft 15 zum letztgenannten Expander 7 strömt nach der Kompression zum Rekuperator 5 und erfährt dort im Wärmetauschverfahren eine kalorische Aufbereitung, wobei die daraus anfallenden Rauchgase 26 abgeleitet werden. Die verdichtete Luft 16 aus Verdichter 7 durchströmt den Rekuperator 5, in welchem sie eine kalorische Aufbereitung erfährt, bevor sie als erhitzte Druckluft 17 den Expander 6 beaufschlägt. Die expandierte Druckluft 18 strömt sodann über einen Nachkühler 19 in einen Abscheider 10. Der Verdichter 7 weist eine Einspritzkühlung auf, so dass die an sich anschliessend im Rekuperator 5 behandelte Druckluft 16 mässig erhitzt wird (bei ca. 15 bar, 150°-560°C). Demnach, im Expander 6 findet dann die Entspannung der im Kompressor 7 quasi isotherm verdichteten und im Rekuperator 5 erhitzte Druckluft mit respektablem Wasserdampfgehalt statt, wobei dieser an sich ungesättigt anfällt. Die am Generator 9 frei gewordene Differenzleistung ist nur unwesentlich geringer, als die Differenz von polytroper und quasi-isothermer Verdichterleistung bei einer gängigen Anlage. Je nach Druckverhältnis des Expanders 6 kondensiert bereits ein kleiner Teil des Wasserdampfes gegen das Ende der Expansion aus. Mindestens der grössere Teil kondensiert jedoch in dem bereits erwähnten Nachkühler 19. Aus dem nachfolgenden Abscheider 10 verlässt die aus diesem auströmende rückgekühlte Luft 20 dann den Prozess über eine Leitung 21, welche mit einem Regelorgan 12 in Wirkverbindung steht. Um die Ansaugluft 13 der Gasturbogruppe GT je nach Bedarf zu konditionieren, d.h. kühlen oder vorwärmen, wird ein Teil der rückgekühlten Luft 20 in die Ansaugluft 13 geleitet. Es ist auch denkbar, dass die Luft 20 in die Prozesslüft einer zur Gasturbogruppe gehörigen Strömungsmaschine eingeleitet wird. Das auskondensierte Wasser aus der expandierten Luft 18 wird im Abscheider 10 gesammelt, und über eine Förderpumpe 11 wieder in den Verdichter 7 zwecks Innenkühlung 24 durch Verdunstung zugeführt. Die Wasserverluste werden durch eine Speisewasserzuleitung 23 kompensiert.

Es können in diesem Zusammenhang mehrere kleinere Gasturbinen GT, auch unterschiedlichen Typus, mit einer grossen Heissluftturbine LT zusammenarbeiten. Auch mehrere kleine, schnelldrehende Heissluftturbinen LT können einer leistungsgrossen Gasturbine GT zugeordnet sein. Ihre übersynchronen Drehzahlen können beispielsweise über einen Umrichter 25 stabilisiert werden.

Fig. 2 zeigt eine Konfiguration zur Minimierung der geometrischen Abmessungen der Heissluftturbine LT. Hier wird der Kreislauf zwecks Aufladung auf höherere Druckniveau über eine aus dem Abscheider abgehende Leitung 27 geschlossen.

Diese Leitung 27 führt rückgekühlte Luft direkt in den Verdichter 7. Das Druckniveau darf hier aber nicht zu hoch angesetzt werden, höchstens auf 3-4 bar bei einem Druckverhältnis von ca. 8, weil sonst die Innenkühlung des Verdichters 7 zu hohe Temperaturen ergibt.

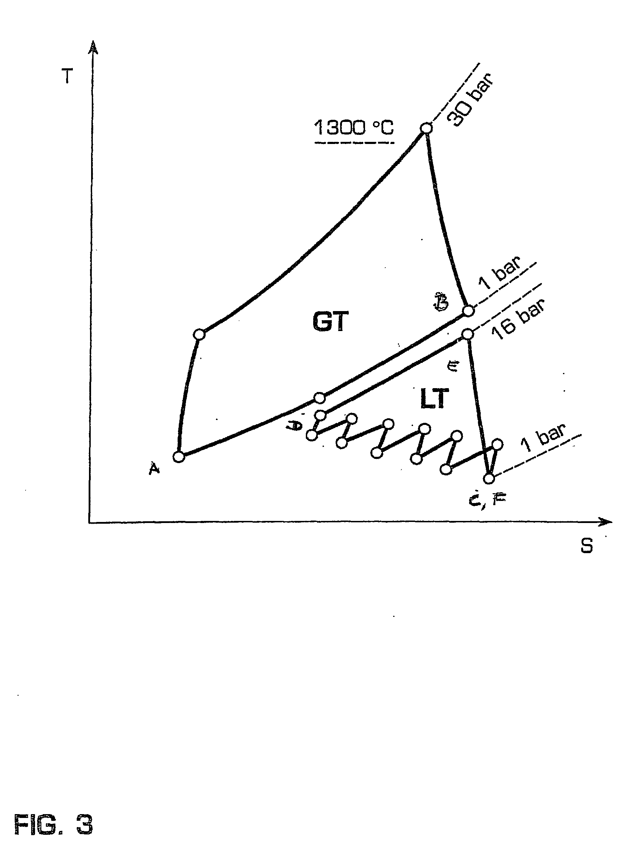

Fig. 3 zeigt die in den Fig. 1 und 2 dargestellten Prozesse, welche auf ein TS-Diagramm übertragen sind.

Es ist davon auszugehen, dass die Kosten für einen sekundären Heissluftturbinenprozess niedriger ausfallen, als für einen Wasserdampfprozess einer Kombianlage. Der Rekuperator 5 ist wesentlicher einfacher als der Wärmetauscher eines Dampfprozesses. Der Wirkungsgrad der hier gezeigten Schaltungen entspricht in etwa jenem eines STIG-Prozesses. Im Gegensatz zu letzterem ist aber die Rückgewinnung des Wassers wesentlicher einfacher, weil dieses im geschlossenen Kreislauf zirkuliert und weil es nur mit reiner Luft in Berührung kommt.

### Bezugszeichenliste

- 1: Verdichtereinheit
- 2: Brennkammer
- 3: Brennstoffzufuhr
- 4: Turbine
- 5: Rekuperator
- 6: Expander
- 7: Verdichter
- 8: Generator
- 9: Generator
- 10: Abscheider
- 11: Förderpumpe
- 12: Regelorgan
- 13: Ansaugluft
- 14: Abgase
- 15: Ansaugluft
- 16: Verdichtete Luft
- 17: Erhitzte Druckluft
- 18: Expandierte Druckluft
- 19: Nachkühler
- 20: Rückgekühlte Luft
- 21: Ablassleitung
- 22: Wasserleitung
- 23: Speisewasser
- 24: Innenkühlung
- 25: Umrichter
- 26: Rauchgase
- 27: Leitung
- GT: Gasturbogruppe
- LT: Heissluftturbinenprozess

## Patentansprüche

1. Verfahren zum Betrieb einer Gasturbogruppe mit ein- oder mehrstufiger Verbrennung, mit einem nachgeschalteten Wärmetauscher (5) zur Weiternutzung des kalorischen Potentials der Abgase (14) aus einer der Gasturbogruppe zugehörigen Turbine (4), wobei eine aus einem Verdichter (7) und einer Turbine (6) bestehende Heissluftturbogruppe (LT) in Wirkverbindung mit dem Wärmetauscher (5) steht,
**dadurch gekennzeichnet,**
- **dass** in dem zur Heissluftturbogruppe (LT) zugehörigen Verdichter (7) eine durch Wassereinspritzung (24) annähernd simulierte isotherme Verdichtung vorgenommen wird, und
- **dass** das eingespritzte Wasser nach erfolgter Expansion (6) durch Kondensation (19) in einem Abscheider (10) aufgefangen wird und
- **dass** ein Teil einer aus dem Abscheider (10) anfallenden Luft (20) in die Ansaugluft (13) eines zur Gasturbogruppe (GT) zugehörigen Verdichters (1) und/oder in die Prozessluft einer zur Gasturbogruppe gehörigen Strömungsmaschine (4) eingeleitet wird oder
- **dass** die im Abscheider (10) anfallende Luft (27) in den Verdichter (7) der Heissluftturbogruppe (LT) eingeleitet wird.

2. Verfahren nach Anspruch 1,
**dadurch gekennzeichnet, dass**
das im Abscheider (10) aufgefangene Wasser (22) zur Wassereinspritzung (24) in den Verdichter (7) der Heissluftturbogruppe (LT) rückgeführt wird.

3. Verfahren nach Anspruch 2,
**dadurch gekennzeichnet, dass**
Wasserverluste durch eine Speisewasserzuleitung (23) kompensiert werden.

4. Verfahren nach Anspruch 1,
**dadurch gekennzeichnet, dass**
mehrere Heissluftturbogruppen (LT) in Wirkverbindung mit dem Wärmetauscher (5) der Gasturbogruppe stehen.

5. Verfahren nach Anspruch 4,
**dadurch gekennzeichnet, dass**
die Drehzahlen der Generatoren der Heissluftturbogruppen (LT) über einen Umrichter (25) stabilisiert werden.

6. Verfahren nach Anspruch 1,
**dadurch gekennzeichnet, dass**
ein Teil des Wasser bereits am Ende der Turbine (6) der Heissluftturbogruppe (LT) auskondensiert.

7. Verfahren nach Anspruch 1,
**dadurch gekennzeichnet, dass**
ein Teil einer aus dem Abscheider (10) anfallenden Luft (20) in die Ansaugluft (13) eines zur Gasturbogruppe (GT) zugehörigen Verdichters (1) eingeleitet wird und auf diese Weise die Ansaugluft des Verdichters (1) der Gasturbogruppe gekühlt oder vorgewärmt wird.

## Claims

1. Method for operating a gas turbo-generator set with single stage or multistage combustion, having a following heat exchanger (5) for further utilization of the caloric potential of the exhaust gases (14) from a turbine (4) associated with the gas turbo-generator set, wherein a hot-air turbo-generator set (LT) consisting of a compressor (7) and a turbine (6) is operatively connected to the heat exchanger (5), **characterized in that**
- isothermal compression, approximately simulated by water injection (24), is carried out in the compressor (7) associated with the hot-air turbo-generator set (LT), and
- after expansion (6) has taken place, the injected water is collected by condensation (19) in a separator (10),
- part of the air (20) occurring from the separator (10) is introduced into the intake air (13) of a compressor (1) associated with the gas turbo-generator set (GT) and/or into the process air of a turbomachine (4) associated with the gas turbo-generator set, and
- the air (27) occurring in the separator (10) is introduced into the compressor (7) of the hot-air turbo-generator set (LT).

2. Method according to Claim 1, **characterized in that** the water (22) collected in the separator (10) is recirculated for water injection (24) into the compressor (7) of the hot-air turbo-generator set.

3. Method according to Claim 2, **characterized in that** water losses are compensated by means of a feedwater delivery line (23).

4. Method according to Claim 1, **characterized in that** a plurality of hot-air turbo-generator sets (LT) are operatively connected to the heat exchanger (5) of the gas turbo-generator set.

5. Method according to Claim 4, **characterized in that** the rotational speeds of the generators of the hot-air turbo-generator sets (LT) are stabilized via a converter (25).

6. Method according to Claim 1, **characterized in that** part of the water is already condensed out at the end of the turbine (6) of the hot-air turbo-generator set (LT).

7. Method according to Claim 1, **characterized in that** part of the air (20) occurring from the separator (10) is introduced into the intake air (13) of a compressor (1) belonging to the gas turbo-generator set (GT) and the intake air of the compressor (1) of the gas turbo-generator set is thereby cooled or preheated.

## Revendications

1. Procédé d'utilisation d'un turbogroupe à turbine à gaz à combustion à un ou plusieurs étages, avec un échangeur de chaleur (5) raccordé en aval pour réutiliser le potentiel calorique des gaz d'échappement (14) d'une turbine (4) faisant partie du turbogroupe à turbine à gaz, selon lequel un turbogroupe à turbine à air chaud (LT) composé d'un compresseur (7) et d'une turbine (6) est en liaison active avec l'échangeur de chaleur (5), **caractérisé en ce que**,
- dans le compresseur (7) faisant partie du turbogroupe à turbine à air chaud (LT) est effectuée une compression isotherme approximativement simulée par injection d'eau (24),
- l'eau injectée est récupérée, après la détente (6), par condensation (19) dans un séparateur (10), et
- une partie de l'air (20) produit par le séparateur (10) est introduite dans l'air aspiré (13) d'un compresseur (1) faisant partie du turbogroupe à turbine à gaz (GT) et/ou dans l'air de cycle d'une turbomachine (4) faisant partie du turbogroupe à turbine à gaz ou
- l'air (27) produit dans le séparateur (10) est introduit dans le compresseur (7) du turbogroupe à turbine à air chaud (LT).

2. Procédé selon la revendication 1, **caractérisé en ce que** l'eau (22) récupérée dans le séparateur (10) est réintroduite dans le compresseur (7) du turbogroupe à turbine à air chaud (LT) pour l'injection d'eau (24).

3. Procédé selon la revendication 2, **caractérisé en ce que** les pertes d'eau sont compensées par une conduite d'eau d'alimentation (23).

4. Procédé selon la revendication 1, **caractérisé en ce que** plusieurs turbogroupes à turbine à air chaud (LT) sont en liaison active avec l'échangeur de chaleur (5) du turbogroupe à turbine à gaz.

5. Procédé selon la revendication 4, **caractérisé en ce que** les vitesses de rotation des générateurs des turbogroupes à turbine à air chaud (LT) sont stabilisées au moyen d'un convertisseur (25).

6. Procédé selon la revendication 1, **caractérisé en ce que** une partie de l'eau est déjà condensée à l'extrémité de la turbine (6) du turbogroupe à turbine à air chaud (LT).

7. Procédé selon la revendication 1, **caractérisé en ce que** une partie de l'air (20) produit par le séparateur (10) est introduite dans l'air aspiré (13) d'un compresseur (1) faisant partie du turbogroupe à turbine à gaz (GT) et l'air aspiré du compresseur (1) du turbogroupe à turbine à gaz est ainsi refroidi ou préchauffé.
